# FASCICULE DE BREVET EUROPEEN

(11) **EP 3 334 641 B1**
(45) Date de publication et mention de la délivrance du brevet: **28.08.2019**
(21) Numéro de dépôt: 16745790.2
(22) Date de dépôt: 06.07.2016
(51) Int. Cl.: B62D 25/00

(54) **STRUCTURE A BRANCARDS EN U DE VÉHICULE UTILITAIRE**
U-FÖRMIGER LÄNGSTRÄGER FÜR KAROSSERIE EINES NUTZFAHRZEUGS
BODY FRAMEWORK U-SHAPED LONGITUDINAL MEMBER FOR A UTILITY VEHICLE

(30) Priorité: 10.08.2015 FR 1557646
(43) Date de publication de la demande: 20.06.2018
(73) Titulaire: PSA AUTOMOBILES S.A., 78300 Poissy (FR)
(72) Inventeur: SYLVANT, Christophe, 25600 Brognard (FR); MANGEL, Thierry, 25600 Brognard (FR)
(74) Mandataire: Fernandez, Francis Lionel
(86) Numéro de dépôt international: PCT/FR2016/051709
(87) Numéro de publication internationale: WO 2017/025668

(56) Documents cités:
- US-A- 5 882 065

## Description

L'invention concerne une structure de véhicule automobile. Plus précisément, l'invention a trait à une structure de plateforme automobile renforcée par des poutres en U mécanosoudées. L'invention propose également un véhicule automobile du type utilitaire.

Une structure de véhicule automobile, notamment d'un véhicule utilitaire, présente généralement une plateforme de chargement. Celle-ci peut être réalisée en plusieurs parties, dont plusieurs tôles réunies axialement. La plateforme présente avantageusement une surface plane de chargement pour recevoir des éléments encombrants. Afin d'améliorer la résistance, des poutres sont rajoutées en dessous pour reprendre les efforts de flexion dans la structure. La fixation s'effectue avantageusement par soudure pour lier les éléments les uns aux autres.

Le document FR 2 775 243 A1 divulgue une carrosserie automobile soudée. Une tôle de plancher est soudée à des profilés en U parallèles. Ces derniers sont encastrés entre des longerons en U disposés latéralement vers l'extérieur. Un écart est prévu entre les bases des U profilés et des longerons, si bien qu'un écartement de consigne peut être respecté par les longerons en U indépendamment des variations d'écart entre les profilés en U. Cette structure permet effectivement de compenser des écarts dans une direction. Toutefois, elle ne garantit pas un positionnement précis entre un longeron et un profilé. De plus une telle structure reste fragile, si bien que les critères de résistance mécanique deviennent plus difficiles à respecter.

Le document US 5 882 065 propose une partie avant de véhicule comportant un plancher avant et plusieurs parties de profilé en U emboitées bout à bout.

L'invention a pour objectif de résoudre au moins un des problèmes posés par l'art antérieur. Plus précisément, l'invention a pour objectif d'améliorer la précision de réalisation d'une structure de véhicule automobile. L'invention a également pour objectif d'améliorer la résistance au choc d'une structure de véhicule automobile.

L'invention a pour objet une structure de véhicule, notamment une structure de plateforme de véhicule utilitaire, la structure comprenant : une cloison, tel un plancher du véhicule ; au moins une poutre de renfort de la cloison, la ou chaque poutre comprenant deux éléments emboîtés, dont un premier élément et un deuxième élément qui présentent chacun un profil en U avec une base et deux ailes, remarquable en ce que dans la ou chaque poutre, la base du premier élément comporte une portion qui est décalée par rapport au niveau général de ladite base et qui est en contact de la base du deuxième élément afin de positionner les éléments suivant une direction de superposition des bases.

De manière avantageuse, dans la ou chaque poutre, la portion décalée est moins large que la base associée, préférentiellement les bases sont généralement parallèles et généralement décalées l'une par rapport à l'autre d'un écart E traversé par la portion décalée.

De préférence, dans la ou chaque poutre, le premier élément et le deuxième élément sont fixés l'un à l'autre au niveau d'une zone de fixation, la portion décalée s'étendant longitudinalement sur la majorité de ladite zone de fixation.

Dans la ou chaque poutre, la portion décalée est avantageusement formée à une extrémité du premier élément et est en contact d'une portion de moindre hauteur et/ou de moindre largeur du deuxième élément.

Selon une forme de réalisation, la structure comprend un brancard au moins partiellement formé par la ou chaque poutre, préférentiellement par deux poutres latérales parallèles s'étendant principalement longitudinalement, la structure comprenant en outre une pluralité de traverses s'étendant entre les poutres parallèles.

De manière préférée, les ailes sont fixées à la cloison et la portion décalée est décalée vers la cloison, préférentiellement chaque aile comprend un rebord à son extrémité opposée à la base qui est fixée à la cloison, notamment par soudage par points.

Avantageusement, dans la ou chaque poutre, la portion décalée est fixée à la base du deuxième élément, préférentiellement par soudage, plus préférentiellement par soudage par points.

Selon une forme de réalisation, au moins un ou chaque deuxième élément comprend un biseau à la jonction entre sa base et au moins une, ou préférentiellement chaque aile, le ou chaque biseau est à distance de la surface interne en U du premier élément associé.

De préférence, chaque aile prolonge verticalement et/ou perpendiculairement la base associée.

Selon une forme de réalisation, dans au moins une ou dans chaque poutre, la portion décalée comprend un orifice qui est mis en correspondance avec un orifice formé sur la base du deuxième élément.

Dans au moins une ou dans chaque poutre, chaque aile du deuxième élément peut épouser une des ailes du premier élément.

Le plancher et chaque poutre entourent de préférence un/des passage(s) généralement en quadrilatère, éventuellement généralement carré. Chaque base est généralement parallèle au plancher. Les éléments sont préférentiellement des profilés.

Selon une forme de réalisation, dans au moins une ou dans chaque poutre, les éléments présentent une zone de jonction où ils sont chaussés l'un dans l'autre, la portion décalée s'étendant sur la majorité longitudinale de ladite zone de jonction.

De préférence, la ou chaque poutre comprend un conduit délimité par un biseau et le premier élément. Le ou chaque biseau est formé avantageusement sur toute la longueur du deuxième élément correspondant.

Chaque premier élément et/ou chaque deuxième élément peut comprendre une tôle pliée qui s'étend sur toute sa longueur.

Dans la ou chaque poutre, la portion décalée peut épouser la base du deuxième élément, préférentiellement la portion décalée comprend une surface plane qui épouse la base plane du deuxième élément.

Selon une forme de réalisation, dans la ou chaque poutre, chaque aile de deuxième élément est fixée à une des ailes du premier élément associé, notamment par soudage par points.

Le ou chaque deuxième élément peut comprendre une extrémité placée à l'intérieur de la forme de U du premier élément associé, préférentiellement la hauteur dudit deuxième élément est inférieure à la hauteur dudit premier élément, et/ou ledit deuxième élément s'étend majoritairement en dehors dudit premier élément.

Dans le sens normal de montage, la cloison est avantageusement au-dessus des éléments, et/ou le deuxième élément est au-dessus de la portion décalée, préférentiellement la portion décalée est décalée vers le haut.

L'invention a également pour objet un véhicule comprenant une structure, remarquable en ce que la structure est conforme à l'invention, préférentiellement la cloison est généralement horizontale, plus préférentiellement le véhicule est un véhicule utilitaire et la cloison forme un espace de chargement principal dudit véhicule utilitaire.

La cloison comprend avantageusement une première tôle en contact du premier élément, une deuxième tôle en contact du deuxième élément et distante du premier élément, et une troisième tôle qui est disposée entre la première tôle et la deuxième tôle et qui est éventuellement fixée au premier élément et au deuxième élément.

De préférence, le véhicule comprend un essieu arrière et/ou un habitacle, l'essieu arrière étant disposé longitudinalement au niveau de la deuxième tôle, et/ou la première tôle étant disposée longitudinalement au niveau de l'habitacle.

Selon une forme de réalisation, les tôles sont des tôles embouties avec des nervures longitudinales de renfort.

La ou chaque tôle s'étend de préférence sur la majorité de la largeur du véhicule, préférentiellement sur sensiblement toute la largeur du véhicule.

L'invention modifie l'un des éléments en y conformant une facette déportée servant d'appui pour l'autre élément. Cet appui permet à la fois un positionnement optimal suivant l'axe vertical, et ajoute une interface de contact propice à un soudage par points. La fixation U dans U devient plus robuste grâce à ce nouveau plan de fixation perpendiculaire aux ailes.

L'invention est particulièrement bénéfique pour une structure dite en échelle, c'est-à-dire avec une série de traverses entre les poutres. En effet, l'invention permet de compenser les contraintes géométriques induites par les traverses et les différentes tôles de plancher.

L'ajout de biseaux favorise un engament vertical optimal entre les éléments. De ce fait, ils peuvent s'accoster simplement l'un dans l'autre, et la portion déportée peut effectivement venir en butée contre l'autre élément. Ceci limite les contraintes internes parasites. Grâce à cette configuration, la structure respecte une géométrie stricte. Montée dans un véhicule, son comportement mécanique et ses déformations en cas de choc sont davantage prédictibles. Cette solution respecte également des impératifs de masse et de coûts de production.

D'autres caractéristiques et avantages de la présente invention seront mieux compris à l'aide de la description donnée à titre d'exemple et en référence aux dessins parmi lesquels :
La figure 1 représente un vue de dessous d'une structure de véhicule selon l'invention.
La figure 2 est une coupe suivant l'axe 2-2 tracé sur la figure 1 d'une poutre de structure de véhicule selon l'invention.
La figure 3 illustre une jonction entre deux éléments au niveau d'une poutre de structure de véhicule selon l'invention.
La figure 4 illustre latéralement une jonction entre deux éléments au niveau d'une poutre de structure de véhicule selon l'invention.

Dans la description qui va suivre, l'axe longitudinal correspond à la direction de déplacement du véhicule, et/ou la dimension principale de la structure. La direction transversale est perpendiculaire à l'axe longitudinal. L'avant correspond au sens principal de déplacement du véhicule.

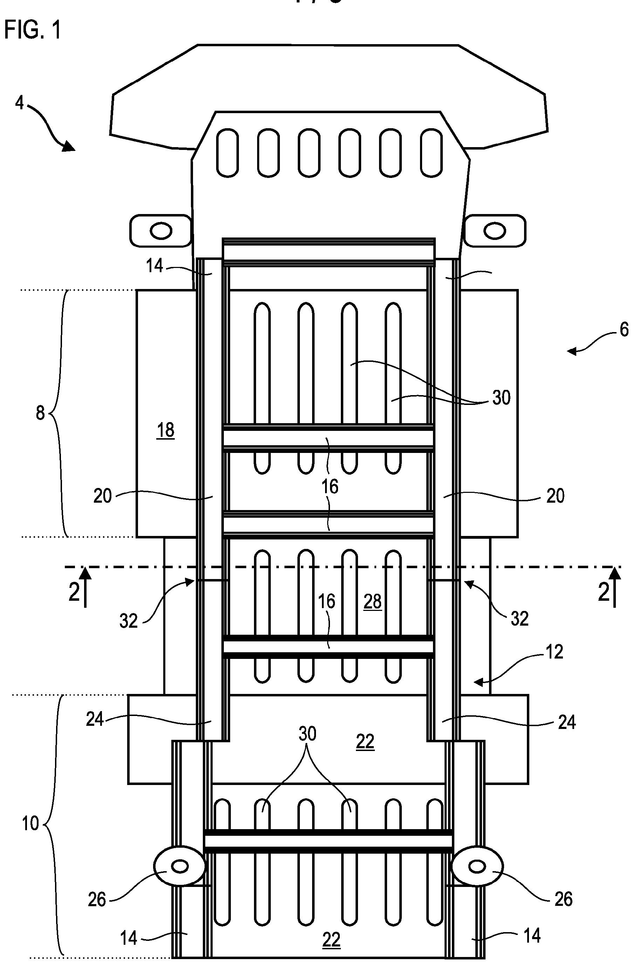

La figure 1 représente en vue de dessous une structure 4 de véhicule. La structure 4 peut former une plateforme de véhicule automobile, par exemple d'un véhicule utilitaire. Elle peut former une portion de caisse de véhicule. La plateforme peut être recouverte d'une cloison 6, tel un plancher général, qui s'étend éventuellement sur toute sa surface.

La structure 4 peut comporter plusieurs unités, dont une première unité 8 ou unité avant, et une deuxième unité 10 ou unité arrière. Un berceau moteur peut être disposé en avant de la première unité de la structure. La structure 4 peut montrer un brancard 12 avec deux poutres 14 généralement parallèles, chaque poutre 14 pouvant être formée de plusieurs éléments. Les poutres 14, éventuellement latérales, peuvent être des longerons du brancard 12. Les poutres 14 améliorent la résistance et la rigidité de la structure 4, tout comme l'ajout de traverses 16 entre elles. La structure 4 peut comprendre au moins trois, préférentiellement au moins cinq traverses 4. Le brancard 12, peut s'étendre longitudinalement sur la majorité, préférentiellement sur essentiellement sur toute la longueur de la structure 4.

La première unité 8 peut comprendre une première tôle supérieure 18 formant partiellement le plancher 6, et des premiers éléments 20 matérialisant au moins partiellement des poutres 14 de brancard central. Ces premiers éléments 20 s'étendent vers l'arrière de la première tôle 18. De son côté ; la deuxième unité 10 présente une deuxième tôle supérieure 22 formant partiellement le plancher 6, et des deuxièmes éléments 24 matérialisant au moins partiellement des poutres 14 de brancard arrière. Les deuxièmes éléments 24 s'étendent vers l'avant de la deuxième tôle 22. La deuxième tôle 22 peut être au niveau des coupelles 26 du train arrière du véhicule. Elle peut également matérialiser une surface de chargement, notamment la surface principale de chargement du véhicule. La deuxième tôle 22 peut être doublée localement, par exemple pour former un laminé renforcé. Un brancard avant peut s'étendre depuis le brancard central vers des absorbeurs de choc avant et/ou recevoir le berceau moteur.

La première tôle 18 et la deuxième tôle 22 sont distantes l'une de l'autre, une troisième tôle 28 est ajoutée pour combler leur écart et fermer la plateforme. Les poutres 14 de brancard 12 sont au moins partiellement formées par la réunion d'un premier élément 20 et d'un deuxième élément 24. Les tôles (18 ; 22 ; 28) peuvent être en acier, en aluminium. Elles peuvent être mises en forme par emboutissage, opération au cours de laquelle des nervures longitudinales 30 peuvent être ajoutées. Ces tôles (18 ; 22 ; 28) peuvent être fixées les unes aux autres à l'aide de points de soudures. Les tôles peuvent en outre être fixées aux éléments de leur unité, éventuellement par soudage par points. La troisième tôle 28 peut être liée à la fois aux premiers et aux deuxièmes éléments (20 ; 24). Ces tôles (18 ; 22 ; 28) peuvent être des tôles principales, en ce sens qu'elles s'étendent latéralement en joignant des bords opposés de la plateforme de la structure 4, et/ou sur la majorité de la largeur de la structure 4.

La fabrication de la structure 4 peut comprendre la réalisation des deux unités (8 ; 10) séparément, puis leur fixation au niveau de leurs éléments (20 ; 24) au niveau de jonctions 32 dans lesquelles sont disposées les zones de fixation des éléments. Ceci simplifie la fabrication de la structure 4 malgré sa complexité. Une jonction 32 peut être entendue comme un tronçon de poutre où les éléments (20 ; 24) se chevauchent, et/ou sont engagés l'un dans l'autre.

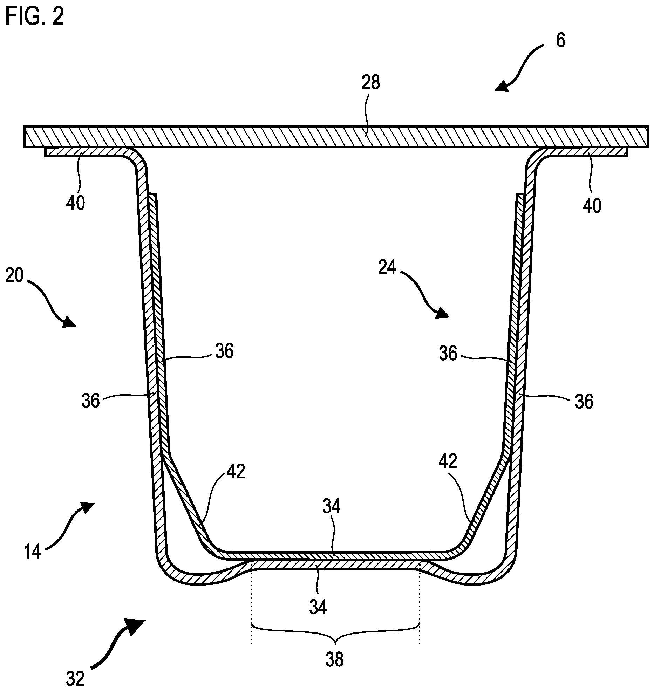

La figure 2 est une vue en coupe d'une des jonctions 32 entre le premier élément 20 et le deuxième élément 24. L'axe de coupe correspond à l'axe 2-2 représenté sur la figure 1. L'orientation de la coupe correspond au sens normal de montage, selon lequel la ou chaque poutre 14 est disposée sous la cloison.

Les éléments (20 ; 24) peuvent des profilés. Par profilé, on entend une pièce allongée conservant un profil général sur sa longueur. Bien entendu, ces profilés peuvent présenter des discontinuités, tels des orifices ou des créneaux découpés ultérieurement. Les éléments (20 ; 24) peuvent chacun être formé à l'aide d'une tôle, en acier ou en alliage d'aluminium. Leur(s) tôle(s) peuvent être façonnées par pliage emboutissage et/ou par extrusion pour améliorer les tolérances géométriques. Chaque élément (20 ; 24) présente un profil en U, avec une base inférieure 34 et deux ailes latérales 36, ou branches latérales, qui s'étendent généralement perpendiculairement de la base 34 vers la cloison 6. La ou chaque poutre 14 est en contact de la cloison 6, par exemple de la troisième tôle 28. La cloison 6 peut d'ailleurs être parallèle aux bases 34 des éléments (20 ; 24).

Les éléments (20 ; 24) sont emboîtés l'un dans l'autre, le deuxième élément 24 étant introduit dans le creux de la forme du U du premier élément 20. Leur interface forme également un profil en U. Par emboîter on entend assembler deux pièces de telle sorte que l'une entre dans l'autre et s'adapte à l'autre. Lors de l'introduction, les ailes 36 viennent en contact de leur homologue. Les bases 24 viennent en contact l'une de l'autre, toutefois ce contact est partiel puisqu'il s'effectue via une portion décalée 38. La portion décalée 38 est décalée par rapport au niveau général de la base 34 du premier élément 20, ou première base. Elle fait saillie par rapport au plan principal de sa base 34. Elle est déplacée vers le deuxième élément 24, elle peut être conformée, modelée, par emboutissage lors du pliage des ailes 36. Cette portion décalée 38 offre une surface dédiée pour recevoir une extrémité du deuxième élément 24. Elle évite qu'il n'y ait d'interférences au niveau des rayons de raccordement du premier élément 20. De plus sa surface est réduite, c'est-à-dire moins large que sa base 34. Par conséquent la géométrie de l'interface est mieux maîtrisée, ce qui privilégie la précision de positionnement entre les éléments (20 ; 24).

Le premier élément 20 peut présenter des rebords supérieurs 40 généralement perpendiculaires aux ailes 36. Ces rebords 40 permettent une fixation à la tôle 28. Le deuxième élément 24 peut présenter des biseaux 42. Ils sont chacun joints à la base 34 et aux ailes 36. Ils sont inclinés de 10° à 30° par rapport à l'aile correspondante. Leur présence accentue l'écartement avec les rayons de raccordement du premier élément 20. Au niveau de la jonction 32, le deuxième élément 24 peut être moins haut que le premier. En dehors, ils peuvent être sensiblement de même hauteur, la différence pouvant correspondre à la portion décalée 38.

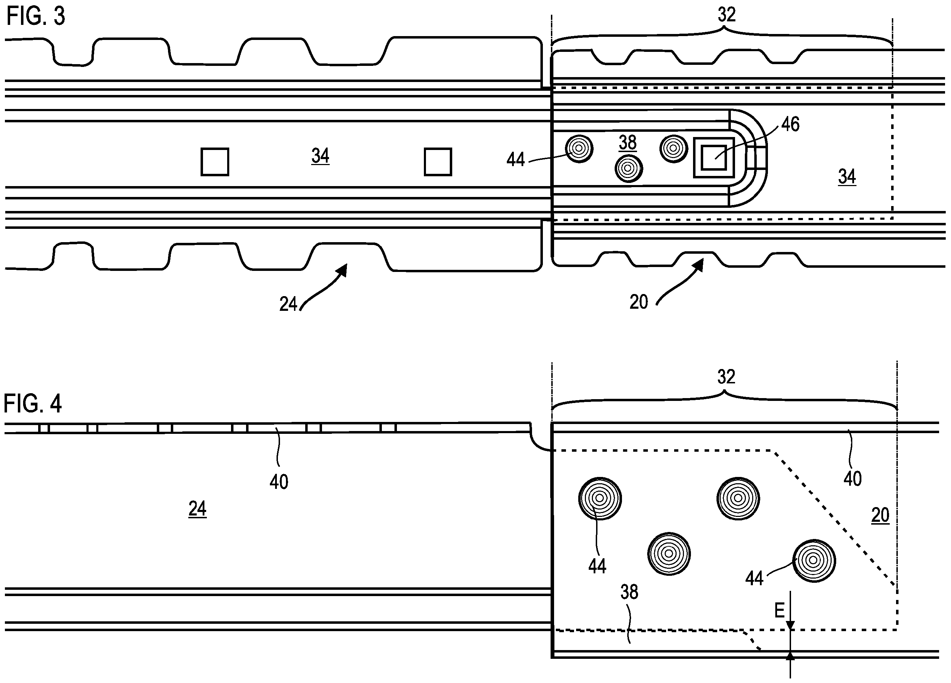

La figure 3 illustre une jonction 32 entre deux éléments (20 ; 24) d'une poutre. La jonction 32 est représentée en vue du dessous, les tôles et les traverses n'étant pas représentées par soucis de clarté.

La portion décalée 38 forme une étendue, par exemple rectangulaire. Elle peut s'étendre sur la majorité de la largeur de la base 34 du premier élément 20, en restant éventuellement à distance des bords latéraux de sa base 34. Elle peut également s'étendre sur la majorité de la longueur de la zone de fixation entre les éléments (20 ; 24). La portion décalée 38 peut être formée à une extrémité du premier élément 20. Elle reçoit des points de soudure 44 pour sa fixation avec le deuxième élément 24. Dans la portion décalée 38, un orifice 46 traversant chaque élément (20 ; 24) permet de les positionner longitudinalement, ce qui permet de maîtriser la longueur de la structure.

En dehors de la jonction, le deuxième élément 24 peut présenter des rebords latéraux 40 pour la réception et la fixation d'une tôle. Chaque rebord 40 d'aile peut être crénelé pour alléger la structure. La jonction 32 peut représenter une minorité longitudinale d'au moins un élément (20 ; 24), préférentiellement de chaque élément (20 ; 24).

Suivant une alternative de l'invention, le deuxième élément présente une portion décalée vers le premier élément, par exemple vers le bas. Suivant l'invention, il est également envisageable que le premier élément soit chaussé à l'intérieur du deuxième élément. La portion décalée du premier élément peut alors être tirée vers le bas, ou être implantée sur le deuxième élément.

La figure 4 illustre de côté une jonction 32 entre deux éléments (20 ; 24) au niveau d'une poutre de structure. L'extrémité du deuxième élément 24 peut être biseautée pour économiser de la masse. Plusieurs points de soudure 44 peuvent être réalisés sur les ailes pour les solidariser. Ces points 44 sont avantageusement disposés en quinconce et réalisés avant la fixation de la troisième tôle. Ils sont répartis sur la zone de fixation qu'ils délimitent.

La zone décalée 38 permet de positionner verticalement les bases des éléments. Sa hauteur peut correspondre à l'écart E entre les bases 34. Elle permet également de positionner verticalement les surfaces supérieures des rebords 40 les unes par rapport aux autres. L'apparition d'un décrochage vertical entre les éléments (20 ; 24) au niveau des surfaces supérieures de leurs rebords 40 est évitée. La surface de réception ainsi formée reste plane pour mieux y souder la troisième tôle.

La portion décalée 38 est de taille réduite. La phase de mise au point des outils pour garantir les tolérances géométriques des éléments (20 ; 24) est simplifiée. L'ajustement, c'est-à-dire la mise au point des surfaces d'emboutissage par ponçage ou par rechargement de matière demande moins de temps, et permet d'aboutir plus rapidement.

## Revendications

1. Structure (4) de véhicule, notamment une structure (4) de plateforme de véhicule utilitaire, la structure (4) comprenant :
- une cloison (6), tel un plancher du véhicule ;
- au moins une poutre (14) de renfort de la cloison (6),
la ou chaque poutre (14) comprenant deux éléments (20 ; 24) emboîtés, dont un premier élément (20) et un deuxième élément (24) qui présentent chacun un profil en U avec une base (34) et deux ailes (36),
**caractérisée en ce que** dans la ou chaque poutre (14),
la base (34) du premier élément (20) comporte une portion (38) qui est décalée par rapport au niveau général de ladite base (34) et qui est en contact de la base (34) du deuxième élément (24) afin de positionner les éléments (20 ; 24) suivant une direction de superposition des bases (34).

2. Structure (4) selon la revendication 1, **caractérisée en ce que** dans la ou chaque poutre (14), la portion décalée (38) est moins large que la base (34) associée, préférentiellement les bases sont généralement parallèles et généralement décalées l'une par rapport à l'autre d'un écart E traversé par la portion décalée (38).

3. Structure (4) selon l'une des revendications 1 à 2, **caractérisée en ce que** dans la ou chaque poutre (14), le premier élément (20) et le deuxième élément (24) sont fixés l'un à l'autre au niveau d'une zone de fixation, la portion décalée (38) s'étendant longitudinalement sur la majorité de ladite zone de fixation.

4. Structure (4) selon l'une des revendications 1 à 3, **caractérisée en ce que** dans la ou chaque poutre (14), la portion décalée (38) est formée à une extrémité du premier élément (20) et est en contact d'une portion de moindre hauteur et/ou de moindre largeur du deuxième élément (24).

5. Structure (4) selon l'une des revendications 1 à 4, **caractérisée en ce qu'**elle comprend un brancard (12) au moins partiellement formé par la ou chaque poutre (14), préférentiellement par deux poutres latérales (14) parallèles s'étendant principalement longitudinalement, la structure (4) comprenant en outre une pluralité de traverses (16) s'étendant entre les poutres (14) parallèles.

6. Structure (4) selon l'une des revendications 1 à 5, **caractérisée en ce que** les ailes (36) sont fixées à la cloison (6) et la portion décalée (38) est décalée vers la cloison (6), préférentiellement chaque aile (36) comprend un rebord (40) à son extrémité opposée à la base (34) qui est fixée à la cloison (6), notamment par soudage par points (44).

7. Structure (4) selon l'une des revendications 1 à 6, **caractérisée en ce que** dans la ou chaque poutre (14), la portion décalée (38) est fixée à la base (34) du deuxième élément (24), préférentiellement par soudage, plus préférentiellement par soudage par points (44).

8. Structure (4) selon l'une des revendications 1 à 7, **caractérisée en ce qu'**au moins un ou chaque deuxième élément (24) comprend un biseau (42) à la jonction entre sa base (34) et au moins une, ou préférentiellement chaque aile (36), le ou chaque biseau (42) est à distance de la surface interne en U du premier élément (20) associé.

9. Structure (4) selon l'une des revendications 1 à 8, **caractérisée en ce que**, dans au moins une ou dans chaque poutre (14), la portion décalée (38) comprend un orifice (46) qui est mis en correspondance avec un orifice formé sur la base du deuxième élément (24).

10. Structure (4) selon l'une des revendications 1 à 9, **caractérisée en ce que**, dans au moins une ou dans chaque poutre (14), les éléments (20 ;24) présentent une zone de jonction (32) où ils sont chaussés l'un dans l'autre, la portion décalée (38) s'étendant sur la majorité longitudinale de ladite zone de jonction (32).

11. Structure (4) selon l'une des revendications 1 à 10, **caractérisée en ce que**, dans la ou chaque poutre (14), la portion décalée (38) épouse la base du deuxième élément (24), préférentiellement la portion décalée (38) comprend une surface plane qui épouse la base plane du deuxième élément (24).

12. Structure (4) selon l'une des revendications 1 à 11, dans la ou chaque poutre (14), chaque aile de deuxième élément (24) est fixée à une des ailes du premier élément (20) associé, notamment par soudage par points.

13. Véhicule comprenant une structure (4), **caractérisé en ce que** la structure (4) est conforme à l'une des revendications 1 à 12, préférentiellement la cloison (6) est généralement horizontale, plus préférentiellement le véhicule est un véhicule utilitaire et la cloison (6) forme un espace de chargement principal dudit véhicule utilitaire.

14. Véhicule selon la revendication 13, **caractérisé en ce que** la cloison (6) comprend une première tôle (18) en contact du premier élément (20), une deuxième tôle (22) en contact du deuxième élément (24) et distante du premier élément (20), et une troisième tôle (28) qui est disposée entre la première tôle (18) et la deuxième tôle (22) et qui est éventuellement fixée au premier élément (20) et au deuxième élément (24).

## Patentansprüche

1. Fahrzeugkarosserie (4), insbesondere eine Nutzfahrzeug-Plattformkarosserie (4), wobei die Karosserie (4) Folgendes umfasst:
- eine Wand (6), wie einen Fußboden des Fahrzeugs;
- mindestens einen Verstärkungsträger (14) der Wand (6),
wobei der oder jeder Träger (14) zwei verschachtelte Elemente (20; 24) umfasst, darunter ein erstes Element (20) und ein zweites Element (24), die jeweils ein U-Profil mit einer Basis (34) und zwei Rippen (36) aufweisen,
**dadurch gekennzeichnet, dass** in dem oder jedem Träger (14) die Basis (34) des ersten Elements (20) einen Abschnitt (38) umfasst, der bezüglich des allgemeinen Niveaus der Basis (34) versetzt ist, und der mit der Basis (34) des zweiten Elements (24) in Berührung ist, um die Elemente (20; 24) entlang einer Überlagerungsrichtung der Basen (34) zu positionieren.

2. Karosserie (4) nach Anspruch 1, **dadurch gekennzeichnet, dass** in dem oder jedem Träger (14) der versetzte Abschnitt (38) weniger breit ist als die dazugehörende Basis (34), bevorzugt die Basen im Allgemeinen parallel und im Allgemeinen voneinander um einen Abstand E, der von dem versetzten Abschnitt (38) durchquert wird, versetzt sind.

3. Karosserie (4) nach einem der Ansprüche 1 bis 2, **dadurch gekennzeichnet, dass** in dem oder jedem Träger (14) das erste Element (20) und das zweite Element (24) aneinander im Bereich einer Befestigungszone befestigt sind, wobei sich der versetzte Abschnitt (38) längs auf dem Hauptteil der Befestigungszone erstreckt.

4. Karosserie (4) nach einem der Ansprüche 1 bis 3, **dadurch gekennzeichnet, dass** in dem oder jedem Träger (14) der versetzte Abschnitt (38) aus einem Ende des ersten Elements (20) gebildet ist und mit einem Abschnitt mit geringerer Höhe und/oder geringerer Breite des zweiten Elements (24) in Berührung ist.

5. Karosserie (4) nach einem der Ansprüche 1 bis 4, **dadurch gekennzeichnet, dass** sie einen Längsträger (12) umfasst, der mindestens teilweise von dem oder jedem Träger (14) gebildet wird, bevorzugt von zwei parallelen seitlichen Trägern (14), die sich im Wesentlichen längs erstrecken, wobei die Karosserie (4) außerdem eine Mehrzahl von Querträgern (16), die sich zwischen den parallelen Trägern (14) erstrecken, umfasst.

6. Karosserie (4) nach einem der Ansprüche 1 bis 5, **dadurch gekennzeichnet, dass** die Rippen (36) an der Wand (6) befestigt sind, und dass der versetzte Abschnitt (38) zu der Wand (6) versetzt ist, wobei bevorzugt jede Rippe (36) eine Krempe (40) an ihrem Ende umfasst, das der Basis (34) entgegengesetzt ist, die an der Wand (6) befestigt ist, insbesondere durch Punktschweißen (44).

7. Karosserie (4) nach einem der Ansprüche 1 bis 6, **dadurch gekennzeichnet, dass** in dem oder jedem Träger (14) der versetzte Abschnitt (38) an der Basis (34) des zweiten Elements (24) bevorzugt durch Schweißen, bevorzugter durch Punktschweißen (44) befestigt ist.

8. Karosserie (4) nach einem der Ansprüche 1 bis 7, **dadurch gekennzeichnet, dass** mindestens ein oder jedes zweite Element (24) eine Kantenabschrägung (42) an der Verbindung zwischen seiner Basis (34) und mindestens einer oder bevorzugt jeder Rippe (36) umfasst, wobei die Kantenabschrägung oder jede Kantenabschrägung (42) von der internen Oberfläche in U des ersten dazugehörenden Elements (20) beabstandet ist.

9. Karosserie (4) nach einem der Ansprüche 1 bis 8, **dadurch gekennzeichnet, dass** in mindestens einem oder jedem Träger (14) der versetzte Abschnitt (38) eine Öffnung (46) umfasst, die mit einer Öffnung, die auf der Basis des zweiten Elements (24) gebildet ist, in Übereinstimmung gebracht ist.

10. Karosserie (4) nach einem der Ansprüche 1 bis 9, **dadurch gekennzeichnet, dass** in mindestens einem oder in jedem Träger (14) die Elemente (20; 24) eine Verbindungszone (32) aufweisen, in der sie ineinander aufgesetzt sind, wobei sich der versetzte Abschnitt (38) auf dem Längshauptteil der Verbindungszone (32) erstreckt.

11. Karosserie (4) nach einem der Ansprüche 1 bis 10, **dadurch gekennzeichnet, dass** sich in dem oder jedem Träger (14) der versetzte Abschnitt (38) an die Basis des zweiten Elements (24) legt, wobei bevorzugt der versetzte Abschnitt (38) eine flache Oberfläche umfasst, die sich an die flache Basis des zweiten Elements (24) legt.

12. Karosserie (4) nach einem der Ansprüche 1 bis 11, wobei in dem oder jedem Träger (14) jede Rippe eines zweiten Elements (24) an einer der Rippen des dazugehörenden ersten Elements (20) insbesondere durch Punktschweißen befestigt ist.

13. Fahrzeug, das eine Karosserie (4) umfasst, **dadurch gekennzeichnet, dass** die Karosserie (4) einem der Ansprüche 1 bis 12 entspricht, die Wand (6) bevorzugt im Allgemeinen horizontal ist, das Fahrzeug bevorzugter ein Nutzfahrzeug ist, und die Wand (6) einen Hauptladeraum des Nutzfahrzeugs bildet.

14. Fahrzeug nach Anspruch 13, **dadurch gekennzeichnet, dass** die Wand (6) ein erstes Blech (18) in Berührung mit dem ersten Element (20) umfasst, ein zweites Blech (22) in Berührung mit dem zweiten Element (24) und von dem ersten Element (20) beabstandet, und ein drittes Blech (28), das zwischen dem ersten Blech (18) und dem zweiten Blech (22) angeordnet ist und eventuell an dem ersten Element (20) und an dem zweiten Element (24) befestigt ist.

## Claims

1. A vehicle body framework (4), in particular a utility vehicle platform body framework (4), the body framework (4) including:
- a partition (6), such as a floor of the vehicle;
- at least one reinforcement beam (14) of the partition (6),
the or each beam (14) including two nested elements (20; 24), including a first element (20) and a second element (24) which each have a U-shaped profile with a base (34) and two wings (36),
**characterized in that** in the or each beam (14), the base (34) of the first element (20) comprises a portion (38) which is offset with respect to the general level of said base (34) and which is in contact with the base (34) of the second element (24) so as to position the elements (20; 24) along a direction of superposition of the bases (34).

2. The body framework (4) according to claim 1, **characterized in that** in the or each beam (14), the offset portion (38) is less wide than the associated base (34), preferably the bases are generally parallel and generally offset with respect to one another by a gap E traversed by the offset portion (38).

3. The body framework (4) according to one of claims 1 to 2, **characterized in that** in the or each beam (14), the first element (20) and the second element (24) are attached to one another at the level of an attachment zone, the offset portion (38) extending longitudinally over the majority of said attachment zone.

4. The body framework (4) according to one of claims 1 to 3, **characterized in that** in the or each beam (14), the offset portion (38) is formed at one end of the first element (20) and is in contact with a portion of smaller height and/or of smaller width of the second element (24).

5. The body framework (4) according to one of claims 1 to 4, **characterized in that** it includes a longitudinal member (12) at least partially formed by the or each beam (14), preferably by two parallel lateral beams (14) extending principally longitudinally, the body framework (4) furthermore including a plurality of cross members (16) extending between the parallel beams (14).

6. The body framework (4) according to one of claims 1 to 5, **characterized in that** the wings (36) are attached to the partition (6) and the offset portion (38) is offset towards the partition (6), preferably each wing (36) includes an edge (40) at its end opposite the base (34) which is attached to the partition (6), in particular by spot welding (44).

7. The body framework (4) according to one of claims 1 to 6, **characterized in that** in the or each beam (14), the offset portion (38) is attached to the base (34) of the second element (24), preferably by welding, more preferably by spot welding (44).

8. The body framework (4) according to one of claims 1 to 7, **characterized in that** at least one or each second element (24) includes a bevel (42) at the junction between its base (34) and at least one, or preferably each wing (36), the or each bevel (42) is at a distance from the internal U-shaped surface of the associated first element (20).

9. The body framework (4) according to one of claims 1 to 8, **characterized in that**, in at least one or in each beam (14), the offset portion (38) includes an orifice (46) which is placed in correspondence with an orifice formed on the base of the second element (24).

10. The body framework (4) according to one of claims 1 to 9, **characterized in that**, in at least one or in each beam (14), the elements (20; 24) have a junction zone (32) where they are fitted one in the other, the offset portion (38) extending over the longitudinal majority of said junction zone (32).

11. The body framework (4) according to one of claims 1 to 10, **characterized in that**, in the or each beam (14), the offset portion (38) fits the base of the second element (24), preferably the offset portion (38) includes a flat surface which fits the flat base of the second element (24).

12. The body framework (4) according to one of claims 1 to 11, in the or each beam (14), each wing of second element (24) is attached to one of the wings of the associated first element (20), in particular by spot welding.

13. A vehicle including a body framework (4), **characterized in that** the body framework (4) is in accordance with one of claims 1 to 12, preferably the partition (6) is generally horizontal, more preferably the vehicle is a utility vehicle and the partition (6) forms a main loading space of said utility vehicle.

14. The vehicle according to claim 13, **characterized in that** the partition (6) includes a first metal plate (18) in contact with the first element (20), a second metal plate (22) in contact with the second element (24) and remote from the first element (20), and a third metal plate (28) which is arranged between the first metal plate (18) and the second metal plate (22) and which is possibly attached to the first element (20) and to the second element (24).
